# EUROPÄISCHE PATENTANMELDUNG

(11) **EP 1 933 050 A1**
(43) Veröffentlichungstag der Anmeldung: **18.06.2008**
(21) Anmeldenummer: 07023431.5
(22) Anmeldetag: 04.12.2007
(51) Int. Cl.: F16D 13/58

(54) **Kupplungsvorrichtung**

(30) Priorität: 16.12.2006 DE 102006059597; 10.11.2007 DE 102007053724
(71) Anmelder: ZF Friedrichshafen AG, 88038 Friedrichshafen (DE)
(72) Erfinder: Ziegler, Erwin, 97535 Wasserlosen (DE); Hirschmann, Frank, 94121 Salzweg (DE)

(57) **Zusammenfassung**

Die Erfindung betrifft eine Kupplungsvorrichtung, insbesondere eine Kraftfahrzeug-Reibungskupplung, die ein Kupplungsgehäuse (1) aufweist, in dem eine auf eine Anpressplatte (2) wirkende Membranfeder (3) gelagert ist, wobei die Membranfeder (3) am Kupplungsgehäuse (1) von einem Halteelement (4) gehalten wird und wobei zwischen einem axialen Anschlag (5) des Halteelements (4) und der Membranfeder (3) und/oder zwischen einem axialen Anschlag (6) des Halteelements (4) und dem Kupplungsgehäuse (1) ein Federelement (7) angeordnet ist, das zwischen den beiden Bauteilen eine axiale Kraft ausüben kann. Um eine leichte Montage des Federelements zu ermöglichen, sieht die Erfindung vor, dass das Federelement (7) zwei Gruppen von Abschnitten (8, 9) aufweist, die alternierend angeordnet sind und die sich auf unterschiedlichen Radien (r₁, r₂) von der Drehachse (10) der Kupplungsvorrichtung entfernt befinden.

## Beschreibung

Die Erfindung betrifft eine Kupplungsvorrichtung, insbesondere eine Kraftfahrzeug-Reibungskupplung, die ein Kupplungsgehäuse aufweist, in dem eine auf eine Anpressplatte wirkende Membranfeder gelagert ist, wobei die Membranfeder am Kupplungsgehäuse von einem Halteelement gehalten wird und wobei zwischen einem axialen Anschlag des Halteelements und der Membranfeder und/oder zwischen einem axialen Anschlag des Halteelements und dem Kupplungsgehäuse ein Federelement angeordnet ist, das zwischen den beiden Bauteilen eine axiale Kraft ausüben kann.

In gedrückt betätigten Druckplatten insbesondere von Kraftfahrzeug-Reibungskupplungen stellt sich bei Vorrichtungen der oben genannten Art über die Gebrauchsdauer der Kupplung ein Verschleiß der Membranfederauflagen ein. Durch diesen Verschleiß wird der Abhub der Anpressplatte verringert. Wird der zu erwartende Verschleiß bei der Auslegung der Kupplung vorgehalten, ist der Abhub der neuen Kupplung um den Verschleiß größer als eigentlich benötigt. Dadurch ergibt sich eine ungünstige Übersetzung und ein schlechter Wirkungsgrad mit entsprechend großer Ausrückkraft.

Daher ist es bekannt geworden, den Auflagenverschleiß durch vorgespannte elastische Elemente in Form von Tellerfedern auszugleichen. Bei Druckplatten mit Haltering wird die Tellerfeder oberhalb des Gehäuses unter die Laschen des Halterings eingelegt. Bei der Montage wird die Tellerfeder vorgespannt. Kommt es zu einem Verschleiß, entspannt sich die Tellerfeder um einen entsprechenden Betrag und gleicht so den Verschleiß aus.

Die DE 26 13 048 C2 sieht eine im Radialschnitt V-förmig ausgebildete Feder vor, die sich an einem radial verlaufenden Abschnitt des Halterings abstützt und die Membranfeder gegen das Kupplungsgehäuse drückt. Aus der DE 30 22 595 A1 ist eine ähnliche Lösung bekannt. Das Federelement ist hier als Ring ausgeführt, der zwei Schenkel aufweist, von denen einer sich wieder an einem radial verlaufenden Abschnitt des Halterings abstützt und der andere die Membranfeder gegen das Gehäuse drückt.

In beiden Fällen ist das Federelement relativ aufwändig ausgestaltet, damit es in der richtigen Umfangslage zu liegen kommt. Bei der DE 30 22 595 A1 sind hierzu nasenartige Einprägungen in das Federelement eingebracht, in die die zungenartigen Vorsprünge des Halteelements eingreifen müssen. Eine solche Lösung zeigt auch die DE 30 23 841 A1. Dort wird alternativ auch vorgesehen, dass in das Federelement fensterartige Ausstanzungen eingearbeitet werden, um für die richtige Position, in Umfangsrichtung betrachtet, zu sorgen.

Bei der GB 1 511 745 wird bereits das Halteelement selber so ausgeführt, dass es eine tellerfederartige Eigenschaft aufweist. Damit kann in analoger Weise Verschleiß ausgeglichen werden.

Bei der DE 40 10 335 C2 und bei der GB 961 405 werden zwischen der Membranfeder und dem Gehäuse bzw. dem Haltering Drahtringe eingelegt. Diese haben jedoch dort keine verschleißausgleichende Funktion, sondern dienen als Lagerstellen für die Membranfeder. Sie werden dort auch treffend als Gelenklagerringe bzw. als ,,fulcrum ring" bezeichnet.

Nachteilig ist bei den vorbekannten Lösungen, dass die Herstellung der Spielausgleichsfunktion relativ aufwändig ist. Die Herstellung der vorbekannten Tellerfedern ist sehr aufwändig, insbesondere wenn dafür Sorge getragen werden soll, dass sie in der genau gewünschten Umfangslage zu liegen kommen. Auch die Montagekosten sind relativ hoch, da die gefertigte Tellerfeder bei der Montage präzise gehandhabt werden muss, um in die richtige Montageendlage zu gelangen.

Der Erfindung liegt daher die **Aufgabe** zugrunde, eine Kupplungsvorrichtung der eingangs genannten Art so fortzubilden, dass es möglich ist, die benötigte Verschleißausgleichsfunktion einfacher und kostengünstiger bereitzustellen. Dies gilt sowohl für die Herstellung der hierfür benötigten Bauteile als auch für den Montagevorgang.

Die **Lösung** dieser Aufgabe durch die Erfindung ist dadurch gekennzeichnet, dass das Federelement zwei Gruppen von Abschnitten aufweist, die alternierend angeordnet sind und die sich auf unterschiedlichen Radien von der Drehachse der Kupplungsvorrichtung entfernt befinden.

Mit dieser Ausgestaltung wird es möglich, in sehr ökonomischer Weise das Federelement herzustellen, wobei dennoch ein guter Federeffekt und damit ein guter Ausgleich von Verschleiß ermöglicht wird. Ferner gestaltet sich die Montage des Federelements - wie noch zu sehen sein wird - sehr einfach.

Die Abschnitte mit größerem Radius liegen im montierten Zustand des Federelements nach einer Ausführungsform der Erfindung auf axial ausgerichteten Aufnahmeabschnitten des Halteelements auf. Es kann alternativ aber auch vorgesehen werden, dass die Abschnitte mit größerem Radius in nutförmigen Ausnehmungen in sich radial erstreckenden Anlageabschnitten des Halteelements angeordnet sind.

Die Unterschiede in den Radien müssen nicht groß sein. Eine bevorzugte Ausführungsform sieht vor, dass der größere Radius zwischen 101 % und 105 %, vorzugsweise zwischen 102 % und 104 %, des kleineren Radius beträgt.

Die Gruppen von Abschnitten des Federelements sind dabei zur Erzielung eines axialen Federwegs axial zueinander verschoben angeordnet.

Das Federelement besteht bevorzugt aus einem ringförmigen Draht, wobei die Abschnitte durch Biegungen des Drahts ausgebildet sind. Der Draht des Federelements ist vorzugsweise im Querschnitt kreisförmig ausgebildet.

Das Halteelement kann durch ein ringförmiges Bauteil gebildet werden, das eine Anzahl zungenförmige Laschen aufweist, die durch über den Umfang verteilt angeordnete Öffnungen im Kupplungsgehäuse hindurch treten, wobei der hindurch tretende Teil der Laschen umgebogen ist und sich in radiale Richtung erstreckt. In diesem Falle ist bevorzugt vorgesehen, dass die Abschnitte mit kleinerem Radius zwischen zwei Laschen des Halteelements positioniert sind. Ferner kann vorgesehen werden, dass das Halteelement im Radialschnitt U-förmig ausgebildet ist.

Die Membranfeder weist meistens eine Anzahl Federsegmente auf.

In der Zeichnung sind Ausführungsbeispiele der Erfindung dargestellt. Es zeigen:
- Fig. 1: in perspektivischer Ansicht eine Reibungskupplung,
- Fig. 2: die Reibungskupplung gemäß Fig. 1 im Radialschnitt,
- Fig. 3: das Federelement zur axialen Vorspannung der Auflage der Membranfeder in der Vorderansicht,
- Fig. 4: einen Ausschnitt des Federelements gemäß der Ansicht A nach Fig. 3 und
- Fig. 5: eine alternative Ausgestaltung der Reibungskupplung im Radialschnitt.

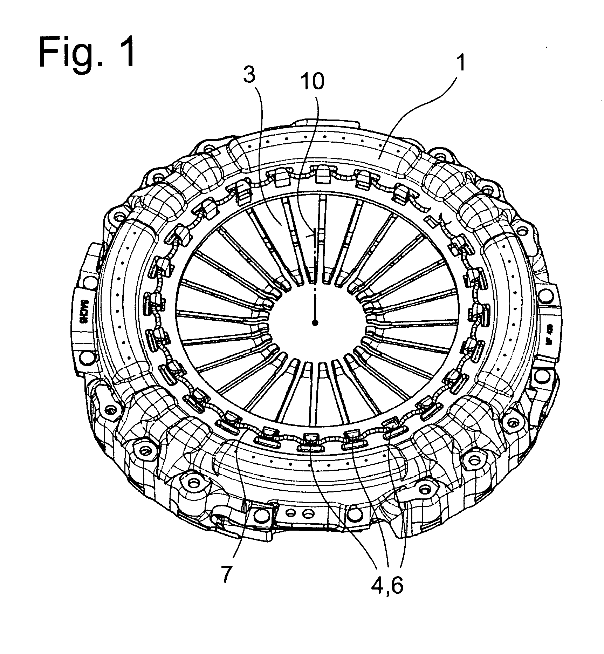

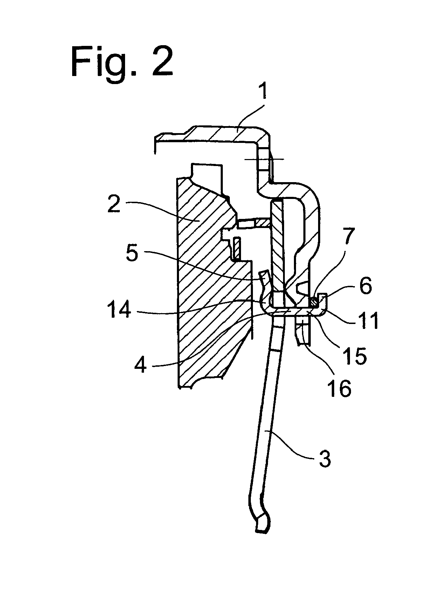

In Fig. 1 ist eine Kraftfahrzeug-Reibungskupplung zu sehen, die ein Kupplungsgehäuse 1 aufweist, in dem eine Membranfeder 3 gelagert ist. Durch deren axiale Verschiebung im radial inneren Bereich wird eine Anpressplatte 2, s. Fig. 2, gegen eine nicht dargestellte Kupplungsscheibe gedrückt, die wiederum dann gegen ein Motor-Schwungrad drückt.

Für die Halterung der Membranfeder 3 im Kupplungsgehäuse 1 ist ein Halteelement 4 vorgesehen. Dies besteht aus einem ringförmigen Bauteil 14, das eine Anzahl zungenförmiger Laschen 15 aufweist, die durch Öffnungen 16 im Kupplungsgehäuse 1 hindurchgreifen. Jenseits des Kupplungsgehäuses 1 sind die Laschen 15 umgebogen, so dass ihr Ende in radiale Richtung nach außen weist und sich quasi im Kupplungsgehäuse 1 verhakt. Der sich radial erstreckende Teil ist in Fig. 2 mit der Bezugsziffer 6 versehen.

In dieser Figur ist weiter zu sehen, dass das Halteelement 4 in dem der Anpressplatte 2 zugewandten Bereich einen axialen Anschlag 5 bildet. Entsprechend bilden die zungenförmigen Laschen 15 in dem von der Anpressplatte 2 abgewandten Bereich axiale Anschläge 6.

Damit auch bei Verschleiß der Membranfederauflage keine Verringerung des Abhubs der Kupplung bei deren Lüften stattfindet, ist ein Federelement 7 zwischen das Kupplungsgehäuse 1 und dem axialen Anschlag 6 eingebracht. Die zungenförmigen Laschen 15 bilden für das Federelement 7 einen Aufnahmeabschnitt 11, an dem es radial anliegt.

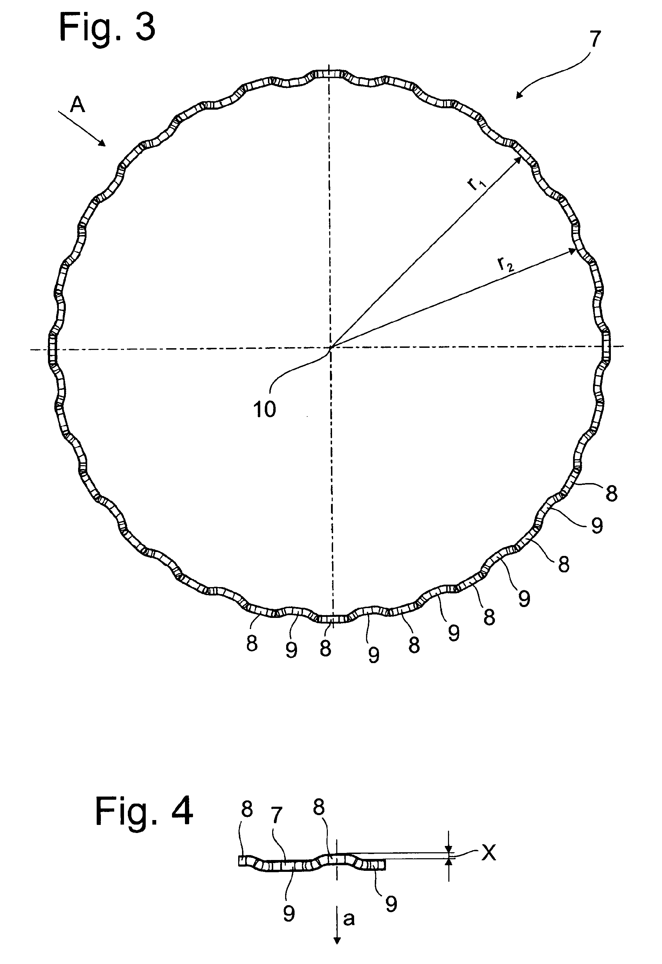

Details zum Aufbau des Federelements 7 sind aus den Figuren 3 und 4 ersichtlich. Das Federelement 7 besteht aus einem Drahtring, wobei der Draht einen kreisförmigen Querschnitt aufweist. Der Draht ist dabei so gebogen, dass sich zwei Gruppen von Abschnitten 8 und 9 bilden, die über dem Umfang des Federelements 7 alternierend angeordnet sind, sich also abwechseln.

In der in Fig. 3 zu sehenden Vorderansicht des Federelements 7 ist zu erkennen, dass die eine Gruppe von Abschnitten 8 radial weiter außerhalb als die andere Gruppe von Abschnitten 9 angeordnet ist.

Der Radius der äußeren Abschnitte 8 von der Drehachse 10 ist mit r₁ angegeben, derjenige der inneren Abschnitte 9 mit r₂. Der Unterschied in den Radien r₁ und r₂ ist allerdings nicht groß. Der größere Radius r₁ beträgt etwa 102 % bis 104 % des kleineren Radius r₂.

Das reicht allerdings bereits aus, um das Federelement problemlos und einfach in der Position zu montieren, wie sie am besten aus Fig. 1 ersichtlich ist: Die Abschnitte 9 mit geringerem Radius kommen zwischen zwei Anschlägen 6 des Halteelements 4 zu liegen, während die Abschnitte 8 mit größerem Radius genau auf den Aufnahmeabschnitten 11 des Halteelements 4 (s. Fig. 2) zu liegen kommen. Anders ist das Federelement 7 gar nicht montierbar, so dass der Montagevorgang entsprechend einfach ist.

Um den Verschleißausgleich bewerkstelligen zu können, muss das Federelement 7 eine Vorspannkraft in axiale Richtung a erzeugen können. Aus der Darstellung gemäß Fig. 4 ist ersichtlich, wie dies erfolgt. Hier ist ein Abschnitt des Federelements 7 aus radialer Richtung, nämlich aus der Richtung A gemäß Fig. 3, betrachtet.

Die radial äußeren Abschnitte 8 liegen in axiale Richtung a gesehen um einen Federweg x von den radial innenliegenden Abschnitten 9 entfernt. Um diesen Federweg lässt sich also das Federelement bei der Montage axial zusammendrücken. Bei Verschleiß entspannt sich das Federelement 7 entsprechend und gleicht durch eine Verschiebung in axiale Richtung a den Verschleiß aus.

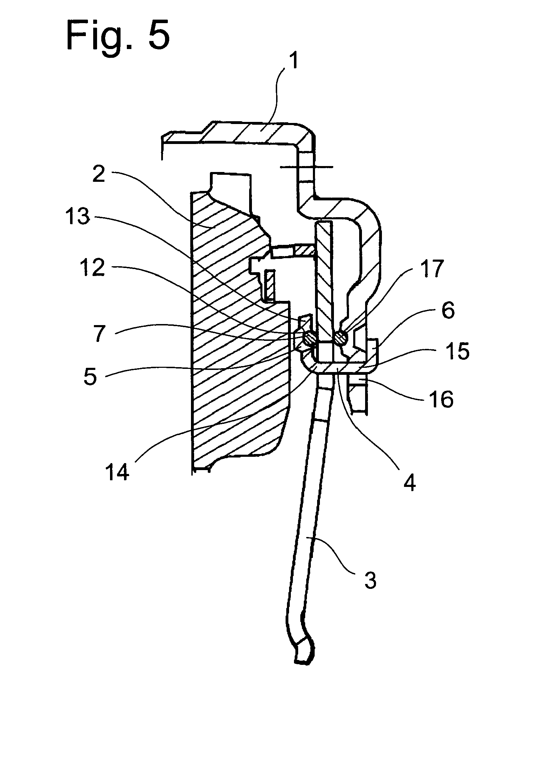

Eine alternative Ausführungsform der Erfindung ist in Fig. 5 zu sehen. Hier ist das Federelement 7 nicht zwischen dem äußeren axialen Anschlag 6 und dem Kupplungsgehäuse 1, sondern zwischen dem inneren axialen Anschlag 5 und der Membranfeder 3 angeordnet. Ansonsten gelten dieselben Ausführungen wie zu dem Ausführungsbeispiel gemäß Fig. 2. Anders gelöst ist hier noch die Lagesicherung des Federelements 7 relativ zum Halteelement 4. Der sich radial erstreckende Abschnitt 13 des Halteelements 4 hat hier eine nutförmige Ausnehmung 12, wobei die Nutform in Übereinstimmung mit der äußeren Form des Federelements 7 halbkreisförmig ausgeführt ist.

Über dem Umfang des Halteelements 4 ist eine Anzahl sich radial erstreckender Abschnitte 13 angeordnet, die jeweils von Ausschnitten begrenzt werden. Bei der Montage wird das Federelement 7 in die nutförmige Vertiefung 12 eingelegt und unter Vorspannung dann montiert. Die Ausgestaltung des Federelements 7 entspricht wieder derjenigen gemäß Fig. 3 und 4. Allerdings ragen hier die Abschnitte 9 mit geringerem Radius zwischen zwei sich radial erstreckenden Abschnitten 13 nach innen; die Abschnitte 8 mit größerem Radius liegen in den nutförmigen Ausnehmungen 12.

Auf der Gegenseite, d. h. zwischen dem Kupplungsgehäuse 1 und der Membranfeder 3 ist ein einfacher Drahtring 17 angeordnet, der eine Lagerstelle für die Kippbewegung der Segmente der Membranfeder 3 bildet, wenn diese im radial inneren Bereich axial verschoben wird.

In den Ausführungsbeispielen ist der Haltering in der erläuterten Weise ausgeführt. Es ist jedoch genauso auch möglich, das Erfindungskonzept einzusetzen, wenn zur Halterung der Membranfeder Distanzbolzen eingesetzt werden, die das Kupplungsgehäuse axial durchsetzen. Entsprechend kann auch hier das vorgeschlagene Federelement 7 eingesetzt werden, wobei es als axial gewellter Drahtring zwischen der Membranfeder und den Köpfen der Distanzbolzen montiert vorgespannt werden kann. Kommt es zu Verschleiß, entspannt sich der Drahtring und gleicht dadurch den Verschleiß der Membranfederauflage aus.

### Bezugszeichenliste

- 1: Kupplungsgehäuse
- 2: Anpressplatte
- 3: Membranfeder
- 4: Halteelement
- 5: axialer Anschlag
- 6: axialer Anschlag
- 7: Federelement
- 8: Abschnitt
- 9: Abschnitt
- 10: Drehachse
- 11: Aufnahmeabschnitt des Halteelements
- 12: nutförmige Ausnehmung
- 13: Anlageabschnitt des Halteelements
- 14: ringförmiges Bauteil
- 15: zungenförmige Lasche
- 16: Öffnung
- 17: Drahtring

- r₁: Radien
- r₂: Radius
- a: axiale Richtung
- x: Federweg

## Patentansprüche

1. Kupplungsvorrichtung, insbesondere Kraftfahrzeug-Reibungskupplung, die ein Kupplungsgehäuse (1) aufweist, in dem eine auf eine Anpressplatte (2) wirkende Membranfeder (3) gelagert ist, wobei die Membranfeder (3) am Kupplungsgehäuse (1) von einem Halteelement (4) gehalten wird und wobei zwischen einem axialen Anschlag (5) des Halteelements (4) und der Membranfeder (3) und/oder zwischen einem axialen Anschlag (6) des Halteelements (4) und dem Kupplungsgehäuse (1) ein Federelement (7) angeordnet ist, das zwischen den beiden Bauteilen eine axiale Kraft ausüben kann,
**dadurch gekennzeichnet,**
**dass** das Federelement (7) zwei Gruppen von Abschnitten (8, 9) aufweist, die alternierend angeordnet sind und die sich auf unterschiedlichen Radien (r₁, r₂) von der Drehachse (10) der Kupplungsvorrichtung entfernt befinden.

2. Kupplungsvorrichtung nach Anspruch 1, **dadurch gekennzeichnet, dass** die Abschnitte (8) mit größerem Radius (r₁) auf axial ausgerichteten Aufnahmeabschnitten (11) des Halteelements (4) aufliegen.

3. Kupplungsvorrichtung nach Anspruch 1, **dadurch gekennzeichnet, dass** die Abschnitte (8) mit größerem Radius (r₁) in nutförmigen Ausnehmungen (12) in sich radial erstreckenden Anlageabschnitten (13) des Halteelements (4) angeordnet sind.

4. Kupplungsvorrichtung nach einem der Ansprüche 1 bis 3, **dadurch gekennzeichnet, dass** der größere Radius (r₁) zwischen 101 % und 105 %, vorzugsweise zwischen 102 % und 104 %, des kleineren Radius (r₂) beträgt.

5. Kupplungsvorrichtung nach einem der Ansprüche 1 bis 4, **dadurch gekennzeichnet, dass** die Gruppen von Abschnitten (8, 9) des Federelements (7) axial zueinander verschoben angeordnet sind.

6. Kupplungsvorrichtung nach einem der Ansprüche 1 bis 5, **dadurch gekennzeichnet, dass** das Federelement (7) aus einem ringförmigen Draht besteht, wobei die Abschnitte (8, 9) durch Biegungen des Drahts ausgebildet sind.

7. Kupplungsvorrichtung nach Anspruch 6, **dadurch gekennzeichnet, dass** der Draht des Federelements (7) im Querschnitt kreisförmig ausgebildet ist.

8. Kupplungsvorrichtung nach einem der Ansprüche 1 bis 7, **dadurch gekennzeichnet, dass** das Halteelement (4) durch ein ringförmiges Bauteil (14) gebildet wird, das eine Anzahl zungenförmige Laschen (15) aufweist, die durch über den Umfang verteilt angeordnete Öffnungen (16) im Kupplungsgehäuse (1) hindurch treten, wobei der hindurch tretende Teil der Laschen (15) umgebogen ist und sich in radiale Richtung erstreckt.

9. Kupplungsvorrichtung nach Anspruch 8, **dadurch gekennzeichnet, dass** die Abschnitte (9) mit kleinerem Radius (r₂) zwischen zwei Laschen (15) des Halteelements (4) positioniert sind.

10. Kupplungsvorrichtung nach Anspruch 8 oder 9, **dadurch gekennzeichnet, dass** das Halteelement (4) im Radialschnitt U-förmig ausgebildet ist.

11. Kupplungsvorrichtung nach einem der Ansprüche 1 bis 10, **dadurch gekennzeichnet, dass** die Membranfeder (3) eine Anzahl Federsegmente aufweist.
